# EUROPÄISCHE PATENTSCHRIFT

(11) **EP 0 876 936 B1**
(45) Veröffentlichungstag und Bekanntmachung des Hinweises auf die Patenterteilung: **15.06.2005**
(21) Anmeldenummer: 98107453.7
(22) Anmeldetag: 23.04.1998
(51) Int. Cl.: B60K 31/00

(54) **Bedieneinrichtung für einen Fahrgeschwindigkeitsregler und einen abstandsgeregelten Fahrgeschwindigkeitsregler**
Input device for a cruise controller with inter- vehicle distance regulator
Dispositif de commande pour un régulateur de vitesse avec régulation à distance

(30) Priorität: 07.05.1997 DE 19719475
(43) Veröffentlichungstag der Anmeldung: 11.11.1998
(73) Patentinhaber: MAN Nutzfahrzeuge Aktiengesellschaft, 80976 München (DE)
(72) Erfinder: Schiehlen, Joachim, Dr.-Ing., 82110 Germering (DE); Schwertberger, Walter, Dipl.-Ing. (FH), 82194 Gröbenzell (DE); Hipp, Eberhard, Dipl.-Ing., 80798 München (DE); Jung, Christoph, Dipl.-Ing. (TH), 85757 Karlsfeld (DE)

(56) Entgegenhaltungen:
- EP-A- 0 441 961
- DE-A- 4 338 098
- US-A- 5 091 726
- US-A- 5 197 562
- US-A- 5 477 457
- PATENT ABSTRACTS OF JAPAN vol. 017, no. 558 (M-1493), 7. Oktober 1993 & JP 05 156977 A (TOYOTA MOTOR CORP), 22. Juni 1993
- PATENT ABSTRACTS OF JAPAN vol. 018, no. 543 (M-1687), 17. Oktober 1994 & JP 06 191318 A (TOYOTA MOTOR CORP), 12. Juli 1994
- PATENT ABSTRACTS OF JAPAN vol. 017, no. 517 (M-1481), 17. September 1993 & JP 05 133250 A (TOYOTA MOTOR CORP), 28. Mai 1993
- WINNER H. ET AL: 'Adaptive Cruise Control System Aspects and Development Trends' SAE TRANSACTIONS, SOCIETY OF AUTOMOTIVE ENGINEERS Bd. 105, Nr. 961010, 1996, WARRENDALE, PA, US, Seiten 1412 - 1421

## Beschreibung

Die Erfindung betrifft eine Einrichtung nach dem Oberbegriff des Anspruches 1.

Aus XP-002124577 (SAE-Paper 961010), H. Winner et al.: "Adaptive Cruise Control System Aspects and Development Trends", 1996, Seiten 1412-1421 ist ein gattungsgemäßer abstandsgeregelter Fahrgeschwindigkeitsregler (ACC) als Zusatz zu einem Fahrgeschwindigkeitsregler (FGR) bekannt. Neben der automatischen Umschaltung vom abstandsgeregelten Fahrmodus auf den rein geschwindigkeitsgeregelten Fahrmodus bei schneller fahrendem Vorausfahrzeug ist auch eine manuelle An- und Abschaltung des abstandsgeregelten Fahrmodus vorhanden. Hierzu kann ein separater Schalter vorgesehen sein, der noch weitere Funktionen haben kann.

Eine Einrichtung dieser Art ist aus der DE 43 38 098 C2 bekannt. Die offenbarte Einrichtung betrifft den Bedienhebel und das Management für eine Geschwindigkeitsregelanlage eines Kraftfahrzeuges. Mit einem Hebelschalter am Lenkstock sind acht Positionen schaltbar, wobei mit den Positionen F1 bis F4 in der ersten Schaltebene die gespeicherten Geschwindigkeitsprogramme abrufbar sind und in der zweiten Schaltebene ZF1 bis ZF4 die Geschwindigkeitsprogramme speicherbar und änderbar sind. Zum Aktivieren von einem gewählten Geschwindigkeitsprogramm muß der genannte Hebelschalter z. B. in eine Position F2 gebracht und zusätzlich gezogen (+y-Richtung) werden. Mit der genannten Einrichtung wäre möglicherweise ein abstandsgeregelter Fahrgeschwindigkeitsregler bedienbar, ein einprägsames Bedienmanagement ist aber nicht erkennbar.

Aufgabe der Erfindung ist es, mit möglichst einfachen Bedienmitteln ein möglichst logisches und vollständiges Bedienmanagement für einen Fahrgeschwindigkeitsregler und einen abstandsgeregelten Fahrgeschwindigkeitsregler und einen diesen enthaltenden Fahrgeschwindigkeitsregler zu schaffen.

Diese Aufgabe wird erfindungsgemäß durch die Merkmale des Anspruches 1 gelöst. Vorteilhafte Ausgestaltungen und/oder Weiterbildungen dieser Lösung sind in den Unteransprüchen gekennzeichnet.

Der Fahrgeschwindigkeitsregler (FGR), als selbständige Einrichtung (ohne abstandsgeregelten Fahrgeschwindigkeitsregler), wird mit dem Bedienhebel, wie im Text folgend, aktiviert, eingestellt und deaktiviert.

Mit dem Bedienen der Taste im Bedienhebel auf WA (Wiederaufnahme) wird der Fahrgeschwindigkeitsregler aktiviert und die zuletzt eingestellte Fahrgeschwindigkeit eingeregelt. Will der Fahrzeugführer eine höhere geregelte Geschwindigkeit fahren, so muß er den Bedienhebel in Richtung SET+, will er eine niedrigere geregelte Geschwindigkeit fahren, muß er den Bedienhebel in Richtung SET- bedienen. Durch kurzes Antippen von SET+ oder SET- wird die Geschwindigkeit schrittweise um einen festen Wert, z. B. um 2 km/h, verändert. Wird der Hebel längere Zeit auf SET+ oder SET- gehalten, so wird die Geschwindigkeit kontinuierlich erhöht (+) oder verringert (-). Will der Fahrer den FGR abschalten, weil z. B. ein Stau ist oder nur lagsam gefahren werden kann, so kann er dies mit der Taste im Bedienhebel durch Bedienen auf AUS erreichen.

Wenn der Fahrzeugführer wieder eine andere, als die zuletzt gespeicherte, z. B. die aktuelle Fahrgeschwindigkeit geregelt fahren will, so muß er nur kurzzeitig den Bedienhebel auf SET+ oder SET- bedienen. Wenn, nach dem Abstellen des Motors, der FGR aktiviert werden soll, so geschieht dies ebenfalls mit dem kurzzeitigen Bedienen des Bedienhebels auf SET+ oder SET-. Damit wird auch gleichzeitig die aktuelle Geschwindigkeit gesetzt.

Wird dem Fahrgeschwindigkeitsregler (FGR) nun eine Abstandsregelung übergeordnet hinzugefügt, so hat man den abstandsgeregelten Fahrgeschwindigkeitsregler (ACC = Adaptive Cruise Control). Mit übergeordnet ist hier gemeint, daß zuerst die Abstandsregelung wirkt und erst dann, wenn z. B. kein (langsameres) vorausfahrendes Fahrzeug durch die Abstandsregelung erkannt ist, der Fahrgeschwindigkeitsregler wirkt.

Erfindungsgemäß kann mit einem modifizierten Bedienhebel am Lenkstock und einer wähltaste in der Armaturentafel entweder der ACC oder der FGR gewählt, aktiviert, eingestellt und deaktiviert werden.

Bedienfunktionen des modifizierten Bedienhebels und der Wähltaste in der Armaturentafel für den ACC und den FGR:
a) Nachdem der Motor neu gestartet ist, leuchtet automatisch der größte Abstand, der mit der Taste in der Armaturentafel einstellbar ist, für den ACC auf. Damit ist der ACC aber noch nicht aktiviert. Wenn sich während der Fahrt die Möglichkeit bietet, mit dem ACC zu fahren, so ist der ACC durch Bedienen des Bedienhebels auf SET+ oder SET- aktivierbar. Damit wird auch der angezeigte Abstand als Sollwert vorgegeben und die momentane Geschwindigkeit gesetzt. Die Änderung der Sollgeschwindigkeit erfolgt, wie wenn man nur den FGR hätte, durch Bedienen des Bedienhebels auf SET+ (Erhöhung) oder SET- (Verringerung).
b) Der Abstands-Sollwert für den ACC kann im weiteren Verlauf durch Bedienen der Wähltaste in der Armaturentafel verändert bzw. gesetzt werden.
c) Wenn der ACC deaktiviert werden soll, so kann dies mit dem Bedienen der FGR/ACC-Taste auf AUS erfolgen.
d) Ein Umschalten von ACC-Fahrmodus in den FGR-Fahrmodus und umgekehrt ist nur möglich, wenn beide Modi vorher deaktiviert werden.
e) Wenn der FGR aktiviert werden soil, so ist dies durch Bedienen der Wähltaste in der Armaturentafel auf FGR und Bedienen des Bedienhebels auf SET+ oder SET- möglich.
f) Wenn der FGR deaktiviert werden soll, so kann dies ebenfalls mit der FGR/ACC-Taste durch Bedienen auf AUS erfolgen.
g) Soll während der Fahrt (ohne daß in der Zwischenzeit der Motor abgestellt wurde) der ACC oder FGR wieder aktiviert werden, so ist dies, je nach dem wie die Wähltaste in der Armaturentafel geschaltet ist, durch Bedienen der FGR/ACC-Taste auf WA möglich. Es werden dann die zuletzt gespeicherten Werte von Geschwindigkeit, wenn der FGR gewählt ist, oder von Geschwindigkeit und der mit der Taste gewählte Abstand, wenn der ACC gewählt ist, angestrebt bzw. eingeregelt.
h) Für Überholvorgänge bei aktiviertem ACC sind die Funktionen Überholfhilfe (Ü) und Auffahrhilfe (AH) geschaffen, damit das Überholen in annähernd gewohnter Weise durchführbar ist. Erfindungsgemäß ist für die Überholhilfe (Ü) eine Überholhilfe-Taste (Ü-Taste) im Bedienhebel und für die Auffahrhilfe (AH) das Gaspedal vorgesehen.
   h1) Situation:
      Das Fahrzeug (A) nähert sich mit aktiviertem ACC, wobei momentan der FGR wirkt, (da Fahrzeug (B) noch weiter weg ist) dem langsameren Fahrzeug (B), das dann überholt werden soll.
      Der Fahrer des Fahrzeugs (A) hat die Möglichkeiten:
      I. Überholen mit der Überholhilfe (Ü):
         Er drückt die Ü-Taste und aktiviert damit die Überholhilfe. Dadurch wird die Abstandsregelung deaktiviert oder automatisch auf einen geringen Mindestabstand gesetzt und das Fahrzeug (A) fährt geschwindigkeitsgeregelt an das vorausfahrende Fahrzeug (B) heran. Wenn der Verkehr es erlaubt, kann der Fahrer geschwindigkeitsgeregelt überholen. Ist der Überholvorgang beendet, oder Fahrzeug (B) nicht mehr vor Fahrzeug (A), beides erkennt das System, wird automatisch die Überholhilfe deaktiviert und der ACC aktiviert und es werden die Werte für Geschwindigkeit und Abstand, die vor dem Überholvorgang gesetzt waren, wieder als Sollwerte vorgegeben.
      II. Überholen mit der Auffahrhilfe (AH):
         IIa) Er bedient das Gaspedal so, daß es mindestens aus seiner Ruhelage ausgelenkt, aber noch nicht die Stellung übersteuert, die die momentan wirkende Regelung am Dieselmotor eingestellt hat.
            Damit erreicht der Fahrer, daß die Auffahrhilfe aktiviert ist, die Geschwindigkeitsregelung des FGR weiterhin wirkt und der eingestellte Abstand des ACC unterfahrbar ist. Wenn aus Sicht des Verkehrs das Überholen des Fahrzeuges (B) in dieser Weise durchführbar ist, so erkennt das System anschneßend, daß der Überholvorgang beendet und Fahrzeug (B) nicht mehr vor Fahrzeug (A) ist und aktiviert automatisch wieder den ACC, wenn der Fahrer den Fuß vom Gaspedal nimmt.
            Wenn der Fahrer des Fahrzeuges (A) doch nicht überholen kann und Fahrzeug (B) im Bewertungsbereich der Abstandsregelung ist, so wird der Fahrer des Fahrzeuges (A) den Fuß vom Gaspedal nehmen. Damit aktiviert er ein anderes Programm der Auffahrhilfe, mit dem eine moderate Verzögerung des Fahrzeuges eingeleitet und durchgeführt wird, bis der gesetzte Abstand des ACC wieder eingeregelt ist, oder bis das Programm der Auffahrhilfe für die moderate Verzögerung des Fahrzeuges durch Bedienen des Gaspedals abgebrochen wird. Unter moderater Verzögerung meint man hier eine Verzögerung, wie sie entsteht, wenn das Fahrzeug auf horizontaler Fahrbahn durch die Schleppleistung des Fahrzeuges verzögert wird. Gerät das Fahrzeug (A) trotz der moderaten Verzögerung in den gefährlich nahen Abstandsbereich zum Fahrzeug (B), so wird eine automatische Zwangsbremsung eingeleitet, die den ACC und die Auffahrhilfe deaktiviert. Gleiches gilt auch, wenn das Bremspedal bedient wird.
         IIb) Der Fahrer des Fahrzeuges (A) bedient das Gaspedal so, daß die Stellung, die die momentan wirkende Regelung, hier angenommen der FGR, am Dieselmotor eingestellt hat, übersteuert wird. Damit erreicht der Fahrer, daß das Fahrzeug beschleunigt, die Auffahrhilfe aktiviert ist und der eingestellte Abstand des ACC unterfahrbar ist. Nun kann der Fahrer das Fahrzeug (A), wie dies der Verkehr erfordert,
            z. B. durch moderates Verzögern (siehe IIa), wenn Fahrzeug (B) im Bewertungsbereich des Radarsensors ist, durch Wegnehmen des Fußes vom Gaspedal,
            oder durch weiteres Beschleunigen des Fahrzeuges (A),
            oder durch Halten der aktuellen Geschwindigkeit durch entsprechendes Bedienen des Gaspedals,
      überholen.
      Ist der Überholvorgang durchgeführt oder Fahrzeug (B) nicht mehr vor Fahrzeug (A), beides erkennt das System, so kann der ACC durch Wegnehmen des Fußes vom Gaspedal wieder aktiviert werden. Wenn der Fahrer des Fahrzeuges (A) doch nicht überholen kann, so gilt das unter h1, IIa, Absatz 3 beschriebene.
   h2) Situation:
      Fahrzeug (A) fährt abstandsgeregelt hinter Fahrzeug (B), das überholt werden soll.
      Der Fahrer des Fahrzeugs (A) hat die Möglichkeiten:
      I. Überholen mit der Überholhilfe (Ü)
         Er drückt die Ü-Taste, wodurch das Fahrzeug (A) beschleunigt (wenn die gesetzte Geschwindigkeit höher als die aktuelle Geschwindigkeit ist) und er kann geschwindigkeitsgeregelt überholen. Wenn das Fahrzeug (A) das Fahrzeug (B) überholt hat, so erkennt das System, daß Fahrzeug (B) überholt wurde, deaktiviert automatisch die Überholhilfefunktion (Ü) und aktiviert automatisch wieder den ACC.
      II. Überholen mit der Auffahrhilfe (AH)
         Er bedient das Gaspedal so, daß er mehr Leistung anfordert, als der ACC, in diesem Fall die Abstandsregelung, es vom Dieselmotor fordert und übersteuert diese Einstellung. Damit erreicht der Fahrer, daß die Auffahrhilfe aktiviert und der eingestellte Abstand des ACC unterfahrbar ist. Der Überholvorgang ist in diesem Fall nicht geschwindigkeitsgeregelt (siehe h1, II.b). Ist der Überholvorgang beendet, so erkennt das System, daß Fahrzeug (B) überholt wurde, dann wird, wenn der Fahrer den Fuß vom Gaspedal nimmt, die Auffahrhilfe deaktiviert und der ACC automatisch aktiviert.

      Wenn der Fahrer des Fahrzeugs (A) sieht, daß er Fahrzeug (B) doch nicht überholen kann, so kann er dadurch, daß er den Fuß vom Gaspedal nimmt, eine moderate Verzögerung des Fahrzeugs erreichen, deren Steuerung das System übernimmt. Die Auffahrhilfe bleibt dabei immer noch aktiv. Dadurch wird ermög licht, daß der Fahrer bei der sich nächst bietenden Gelegenheit Fahrzeug (B) überholen kann. Verschwindet Fahrzeug (B) aus dem Bewertungsbereich des Abstandssensors, so wird die Auffahrhilfe automatisch deaktiviert und der ACC automatisch aktiviert.
      Für Überholhilfe und Auffahrhilfe gilt gemeinsam:
      Wenn das Fahrzeug (B) auf längere Sicht nicht mehr überholt werden kann, kann durch Bedienen der FGR/ACC-Taste auf WA der ACC wieder aktiviert werden und die zuletzt gesetzten Werte für Geschwindigkeit und Abstand sind die Sollwertvorgaben.
k) Muß die Fußbremse betätigt werden, so wird der ACC und, wenn sie aktiviert war, die Überholhilfe oder die Auffahrhilfe deaktiviert.

Für den ACC sind folgende Anzeigen vorzusehen:
gesetzte Geschwindigkeit,
ACC aktiv,
gesetzter Abstand,
Überholhilfe/Auffahrhilfe aktiv,
es ist ein vorausfahrendes Fahrzeug erkannt und dessen Geschwindigkeit.

In der Zeichnung ist ein Ausführungsbeispiel der Erfindung schematisch dargestellt.
Es zeigen:
- Fig. 1: den Bedienhebel,

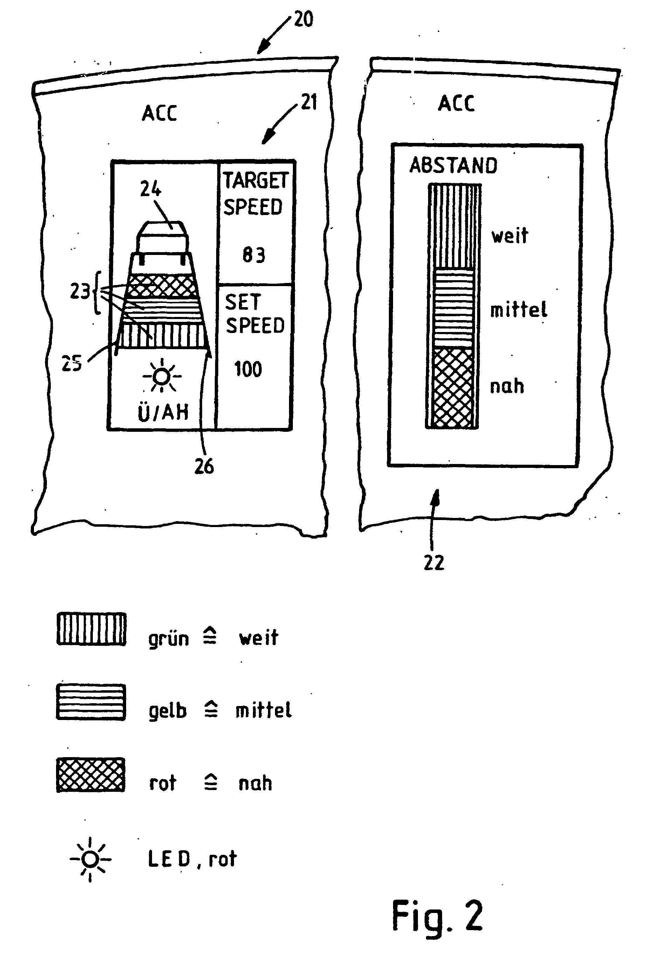

- Fig. 2: Anzeigen in der Armaturentafel,
- Fig. 3: Wipptaste in der Armaturentafel,
- Fig. 4: Drehtaste in der Armaturentafel.

Da das Bedienmanagement bereits ausführlich beschrieben wurde, sollte hier eine Kurzbeschreibung genügen.

### Kurzbeschreibung:

### Fig. 1

### Nachdem der Motor neu gestartet ist und geregelt gefahren werden kann:

Beim Einschalten des Betriebsstromes leuchtet automatisch die Anzeige für den ACC mit dem Abstand "weit" auf, der ACC ist aber noch nicht aktiviert. Die Aktivierung des ACC erfolgt durch Bedienen des Bedienhebels 10 auf SET+ oder SET-, womit gleichzeitig die aktuelle Geschwindigkeit (ab ca. 40 km/h) gesetzt wird.

### Während der Fahrt:

Deaktivieren des ACC:
Bedienen der FGR/ACC-Taste 12 auf AUS.

### Aktivieren des ACC:

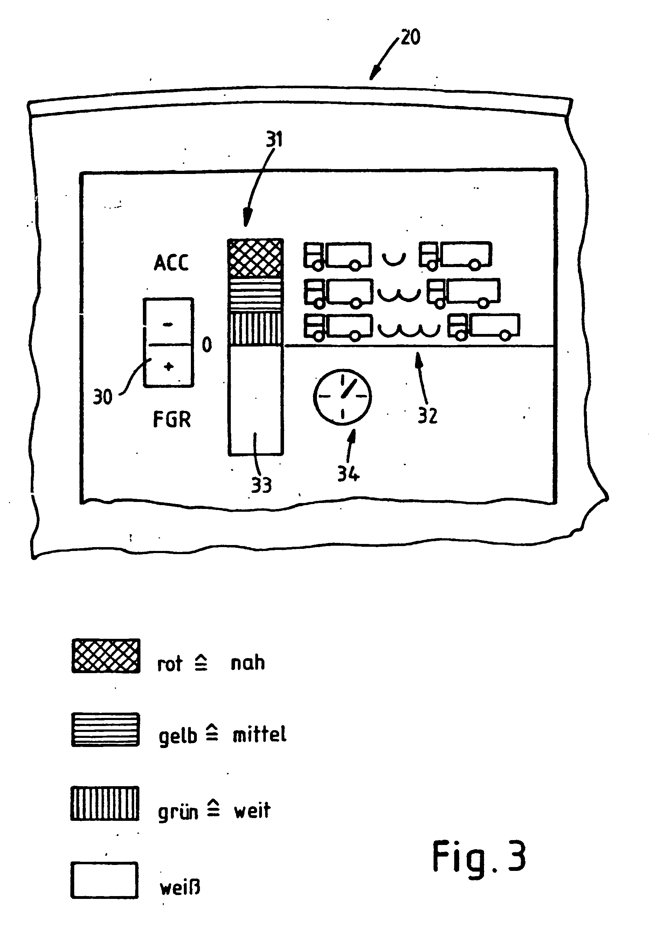

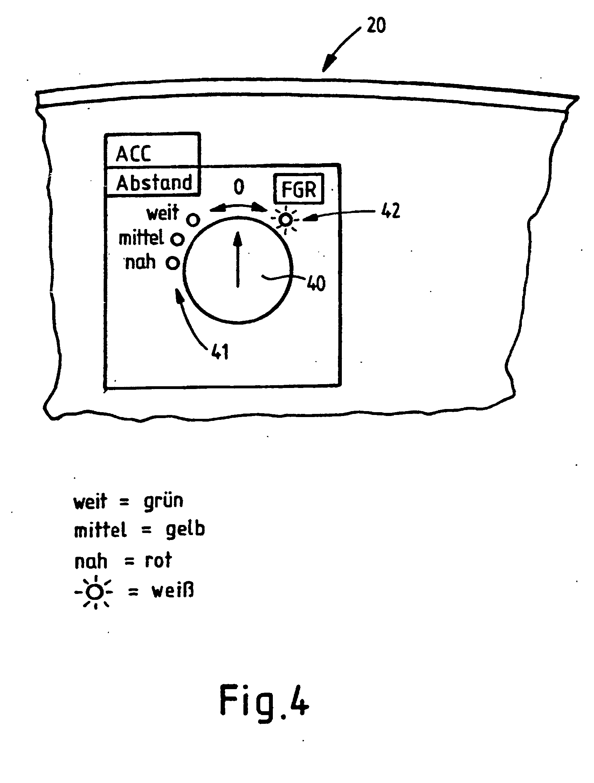

Bedienen der FGR/ACC-Taste 12 auf WA. Die vorher eingestellten Werte für Geschwindigkeit und Abstand sind die Sollwertvorgaben.
Oder: Bedienen von SET+ oder SET-, dabei wird die aktuelle Geschwindigkeit gesetzt und der mit der Wähltaste 30 (Fig. 3), 40 (Fig. 4) eingestellte Abstand zum Einregeln vorgegeben.

### Aktivieren der Überholhilfe Ü:

Bedienen einer Ü-Taste 13 (Druck- oder Wipptaste).

### Deaktivieren der Überholhilfe Ü:

Bedienen der FGR/ACC-Taste 12 auf WA oder, wenn vorausfahrendes Fahrzeug aus dem Erfassungsbereich des Radars verschwindet, oder wenn gefährlich nah auf das vorausfahrende Fahrzeug aufgefahren und dadurch eine Zwangsbremsung verursacht wird, oder durch Betätigen der Fußbremse.

### Aktivieren der Auffahrhilfe AH:

Bedienen des Gaspedals.

### Deaktivieren der Auffahrhilfe AH:

Wie deaktivieren der Überholhilfe Ü. Zusätzlich muß der Fuß vom Gaspedal genommen werden.

### Verändern des gesetzten Abstandes des ACC:

Bedienen der Wähltaste (Wipp- oder Drehtaste) in der Armaturentafel, wobei der ACC, wenn er aktiviert ist, den gewählten Abstandswert ("weit", "mittel" oder "nah") auch gleich einregelt.

### Verändern der gesetzten Geschwindigkeit des ACC:

Bedienen des Bedienhebels 10 auf SET+ oder SET-, bei kurzem Antippen um jeweils eine Stufe (z. B. 2 km/h) oder bei längerem Halten kontinuierlich.

### Umschalten von ACC auf FGR und umgekehrt:

Es müssen beide Modi, der ACC und der FGR, vorher deaktiviert sein, bevor ein anderer Modus aktivierbar ist. Mit der Wähltaste kann dann z. B. der FGR gewählt werden. Die Anzeige des gewählten Modus leuchtet dann auf.

### Aktivieren des FGR (es muß bereits eine Anzeige 33, Fig. 3 oder Anzeige 42, Fig. 4 für den FGR aufleuchten):

Bedienen des Bedienhebels 10 auf SET+ oder SET-, wobei die aktuelle Geschwindigkeit gesetzt wird, oder wenn bereits im FGR-Modus gefahren wurde, durch Bedienen der FGR/ACC-Taste 12 auf WA, wobei die zuletzt gesetzte Geschwindigkeit eingeregelt wird.

### Deaktivieren des FGR:

Bedienen der FGR/ACC-Taste 12 auf AUS oder durch Bremsen mit dem Bremspedal.

### Ändern der Geschwindigkeit des FGR:

Bedienen des Bedienhebels 10 auf SET+ (Erhöhung) oder SET- (Verringerung).

### Fig. 2

In einer Armaturentafel 20 ist ein Display 21 mit Angabe der Geschwindigkeit (83 km/h) eines vorausfahrenden Fahrzeugs mit
TARGET SPEED 83
und der gesetzten Geschwindigkeit (100 km/h) mit
SET SPEED 100
bezeichnet.

Ist ein vorausfahrendes Fahrzeug 24 durch den Abstandssensor erkannt, so erscheinen symbolisch zwei konvergierende Balken 25 und 26 und das vorausfahrende Fahrzeug 24. Die Fläche zwischen den Balken 25 und 26, die die Straße darstellt, kann vorzugsweise für eine Art Säulendiagramm für die Darstellung des eingestellten Abstandes 23 genutzt werden, mit den Abständen 23 "weit", "mittel" und "nah".

Die Darstellung des gesetzten Abstands kann auch mit einem Säulendiagramm 22 erfolgen.

Für die Anzeige der aktivierten Überholhilfe Ü oder der Auffahrhilfe AH ist vorzugsweise im Display 21 eine rote LED vorzusehen.

### Fig. 3

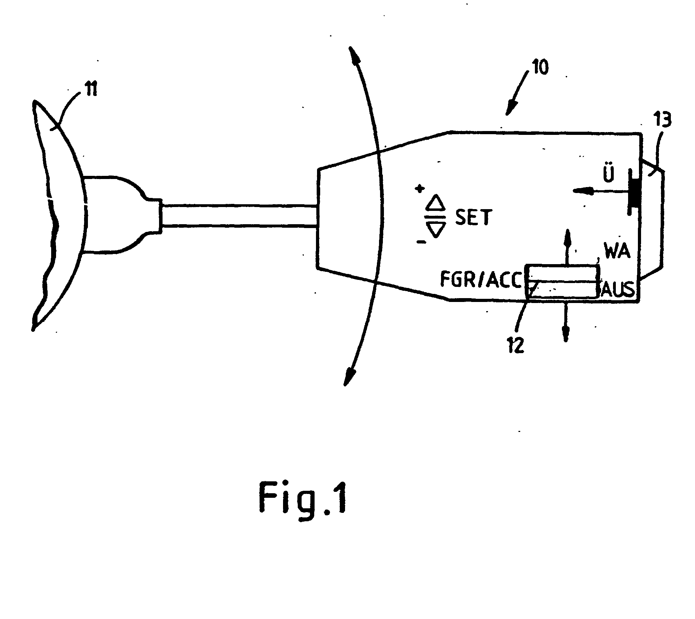

Die Fig. 3 zeigt eine Wipptaste 30 als Wähltaste. Mit der Wipptaste 30 kann zwisehen FGR und ACC und zusätzlich für den ACC der Abstand, eingeteilt in "weit", "mittel" und "nah", gewählt werden. Der gesetzte Abstand zum vorausfahrenden Fahrzeug ist in der Wipptaste 30 und/oder symbolisch zwischen zwei Fahrzeugen mittels Ketten 32 aufleuchtbar dargestellt. Wenn von einem Modus (z. B. ACC) in den anderen Modus (FGR) geschaltet werden soll, so muß der jeweils aktive Modus vorher deaktiviert werden, z. B. mit der FGR/ACC-Taste 12 durch Bedienen auf AUS. Anschließend kann z. B. der FGR-Modus mit der Wipptaste 30 gewählt werden und es leuchtet dann die Anzeige 33 für den FGR auf. Mit dem Bedienhebel 10 (Fig. 1) ist dann der FGR durch Bedienen auf SET+ oder SET- aktivierbar.

### Fig. 4:

Die Fig. 4 zeigt eine Drehtaste 40 als Wähltaste und eine vereinfachte Anzeigendarstellung 41. Hier gilt dasselbe wie in Fig. 3 beschrieben, nur, daß alle Anzeigen mit LED's erfolgen.

## Patentansprüche

1. Einrichtung für die Bedienung eines Fahrgeschwindigkeitsreglers (FGR) sowie eines abstandsgeregelten Fahrgeschwindigkeitsreglers (ACC) eines Kraftfahrzeuges mit einem am Lenkstock (11) angeordneten Bedienhebel (10), der zur Erhöhung einer Sollgeschwindigkeit in eine Stellung SET+ oder zur Verringerung der Sollgeschwindigkeit in eine Stellung SET- betätigbar ist und der eine Taste (12) aufweist, durch deren Betätigen während einer Fahrt ohne zwischenzeitliches Abstellen des Motors in eine Stellung WA beziehungsweise in eine Stellung AUS der Fahrgeschwindigkeitsregler (FGR) oder der abstandsgeregelte Fahrgeschwindigkeitsregler (ACC) aktivierbar beziehungsweise deaktivierbar ist,
**dadurch gekennzeichnet, dass**
in einer Armaturentafel eine Wähltaste (30, 40) vorgesehen ist, mit der bei deaktiviertem Fahrgeschwindigkeitsregler (FGR) und deaktiviertem abstandsgeregeltem Fahrgeschwindigkeitsregler (ACC) eine Auswahl eines Fahrmodus mit Fahrgeschwindigkeitsregler (FGR) oder eines Fahrmodus mit abstandsgeregeltem Fahrgeschwindigkeitsregler (ACC) erfolgt,
wobei bei aktiviertem abstandsgeregeltem Fahrgeschwindigkeitsregler (ACC) eine Veränderung des Abstandssollwerts ermöglicht ist,
und dass die Aktivierung sowie Deaktivierung des Fahrgeschwindigkeitsreglers (FGR) durch Betätigen der Taste (12) am Bedienhebel (10) erfolgt, sofern der Fahrmodus mit Fahrgeschwindigkeitsregler ausgewählt ist, und dass die Aktivierung sowie Deaktivierung des abstandsgeregelten Fahrgeschwindigkeitsreglers (ACC) durch Betätigen der Taste (12) am Bedienhebel (10) erfolgt, sofern der Fahrmodus mit abstandsgeregeltem Fahrgeschwindigkeitsregler ausgewählt ist.

2. Einrichtung für die Bedienung eines Fahrgeschwindigkeitsreglers (FGR) sowie eines abstandsgeregelten Fahrgeschwindigkeitsreglers (ACC) eines Kraftfahrzeuges mit einem am Lenkstock (11) angeordneten Bedienhebel (10), der zur Erhöhung einer Sollgeschwindigkeit in eine Stellung SET+ oder zur Verringerung der Sollgeschwindigkeit in eine Stellung SET- betätigbar ist und der eine Taste (12) aufweist, durch deren Betätigen während einer Fahrt ohne zwischenzeitliches Abstellen des Motors in eine Stellung WA beziehungsweise in eine Stellung AUS der Fahrgeschwindigkeitsregler (FGR) oder der abstandsgeregelte Fahrgeschwindigkeitsregler (ACC) aktivierbar beziehungsweise deaktivierbar ist,
**dadurch gekennzeichnet, dass**
in einer Armaturentafel eine Wähltaste (30) und eine Drehtaste (40) vorgesehen sind, wobei mit der Wähltaste (30) bei deaktiviertem Fahrgeschwindigkeitsregler (FGR) und deaktiviertem abstandsgeregeltem Fahrgeschwindigkeitsregler (ACC) eine Auswahl eines Fahrmodus mit Fahrgeschwindigkeitsregler (FGR) oder eines Fahrmodus mit abstandsgeregeltem Fahrgeschwindigkeitsregler (ACC) erfolgt, und wobei mit der Drehtaste (40) eine Veränderung des Abstandssollwerts ermöglicht ist,
und dass die Aktivierung sowie Deaktivierung des Fahrgeschwindigkeitsreglers (FGR) durch Betätigen der Taste (12) am Bedienhebel (10) erfolgt, sofern der Fahrmodus mit Fahrgeschwindigkeitsregler ausgewählt ist, und dass die Aktivierung sowie Deaktivierung des abstandsgeregelten Fahrgeschwindigkeitsreglers (ACC) durch Betätigen der Taste (12) am Bedienhebel (10) erfolgt, sofern der Fahrmodus mit abstandsgeregeltem Fahrgeschwindigkeitsregler ausgewählt ist.

3. Bedienungseinrichtung nach Anspruch 1 oder 2, **dadurch gekennzeichnet, dass**, nachdem der Motor abgestellt war, im abstandsgeregelten Fahrgeschwindigkeitsregler (ACC) ein größter wählbarer Abstand automatisch einstellbar ist, und durch Betätiger des Bedienhebels (10) auf SET+ oder SET- der abstandsgeregelte Fahrgeschwindigkeitsregler (ACC) aktivierbar ist.

4. Bedienungseinrichtung nach Anspruch 1 oder 3, **dadurch gekennzeichnet, dass** der Abstandssollwert durch die als Wipptaste ausgeführte wähltaste (30) veränder bar ist.

5. Bedienungseinrichtung nach einem der Ansprüche 1 bis 4, **dadurch gekennzeichnet, dass** der Bedienhebel (10) derart ausgeführt ist, dass durch kurzzeitiges Betätigen des Bedienhebeis (10) die Sollgeschwindigkeit schrittweise und bei längerem Halten des Bedienhebels (10) die Sollgeschwindigkeit kontinuierlich veränderbar ist.

6. Bedienungseinrichtung nach einem Ansprüche 1 bis 5, **dadurch gekennzeichnet, dass** wenn während der Fahrt ohne zwischenzeitliches Abstellen des Motors der Fahrgeschwindigkeitsregler (FGR) oder der abstandsgeregelte Fahrgeschwindigkeitsregler (ACC) deaktiviert worden ist, durch Betätigen der am Bedienhebel (10) vorgesehenen Taste (12), der Fahrgeschwindigkeitsregier (FGR) oder der abstandsgeregelte Fahrgeschwindigkeitsregler (ACC) jeweils aktivierbar sind, und die zuletzt eingestellte Sollgeschwindigkeit und der zuletzt eingestellte Abstands-Sollwert wieder einregelbar sind.

7. Bedienungseinrichtung nach einem der Ansprüche 1 bis 6, **dadurch gekennzeichnet, dass** eine Überholhilfe (Ü) für den aktivierten abstandsgeregelten Fahrgeschwindigkeitsregler (ACC) vorgesehen ist, mittels derer der Abstands-Sollwert unterfahrbar ist, indem eine in den abstandsgeregelten Fahrgeschwindigkeitsregler (ACC) integrierte Abstandsregelung deaktivierbar oder auf einen Mindestabstand setzbar ist.

8. Bedienungseinrichtung nach Anspruch 7, **dadurch gekennzeichnet, dass** eine Überholhilfe-Taste (13) im Bedienhebel (10) vorgesehen ist, mit der die Überholhilfe (Ü) aktivierbar ist.

9. Bedienungseinrichtung nach Anspruch 7 oder 8, **dadurch gekennzeichnet, dass** die Überholhilfe (Ü) automatisch durch Betätigung des Blinkerhebels aktivierbar ist.

10. Bedienungseinrichtung nach Anspruch 9, **dadurch gekennzeichnet, dass** durch Betätigen der Taste (12) am Bedienhebel (10) oder Zurückstellen des Blinkerhebels in die Neutralstellung die Überholfhilfe (Ü) deaktivierbar ist.

11. Bedienungseinrichtung einem der Ansprüche 1 bis 10, **dadurch gekennzeichnet, dass** eine Auffahrhilfe (AH) für den aktivierten abstandsgeregelten Fahrgeschwindigkeitsregler (ACC) vorgesehen ist, mittels derer der Abstands-Sollwert unterfahrbar ist, indem eine in den abstandsgeregelten Fahrgeschwindigkeitsregler (ACC) integrierte Abstandsregelung deaktivierbar oder auf einen Mindestabstand setzbar ist.

12. Bedienungseinrichtung nach Anspruch 11, **dadurch gekennzeichnet, dass** durch Betätigen eines Gaspedals die Auffahrhilfe (AH) aktivierbar ist.

13. Bedienungseinrichtung nach Anspruch 12, **dadurch gekennzeichnet, dass** die Auffahrhilfe (AH) aktivierbar ist, ohne dass mit dem Gaspedal eine momentane Motoreinstellung durch den abstandsgeregelten Fahrgeschwindigkeitsregler (ACC) übersteuert wird.

14. Bedienungseinrichtung nach Anspruch 11, **dadurch gekennzeichnet, dass** die Auffahrhilfe (AH) durch Betätigen des Gaspedals aktivierbar ist und die momentan durch den abstandsgeregelten Fahrgeschwindigkeitsregler (ACC) vorgegebene Motoreinstellung übersteuerbar ist.

15. Bedienungseinrichtung nach einem der Ansprüche 11 bis 14, **dadurch gekennzeichnet, dass** die Auffahrhilfe (AH) auch bei Wegnahme des Fußes vom Gaspedal noch aktiv bleibt und eine moderate Verzögerung des Fahrzeuges einleitbar ist, bis der eingestellte Abstands-Sollwert wieder erreicht ist.

16. Bedienungseinrichtung nach einem der Ansprüche 11 bis 15, **dadurch gekennzeichnet, dass** bei aktivierter Überhol- (Ü) oder Auffahrhilfe (AH) bei einem gefährlich nahen Abstand zum vorausfahrenden Fahrzeug, eine automatische Zwangsbremsung aufgrund eines im abstandsgeregelten Fahrgeschwindigkeitsregler (ACC) erzeugten Befehlssignals einleitbar ist und die Überholhilfe (Ü) oder die Auffahrhilfe (AH) deaktivierbar ist.

17. Bedienungseinrichtung nach einem der Ansprüche 11 bis 16, **dadurch gekennzeichnet, dass** ein Abstandsmesssystem mit einem Abstandssensor vorgesehen ist und die Überholhilfe (Ü) oder die Auffahrhilfe (AH) deaktivierbar ist, wenn ein durch das Abstandsmesssystem erkanntes Fahrzeug (B) aus einem Bewertungsbereich des Abstandssensors verschwindet und/oder ein anderes Fahrzeug oder kein Fahrzeug mehr erfasst wird.

18. Bedienungseinrichtung einem der Ansprüche 1 bis 17, **dadurch gekennzeichnet, dass** ein Display (21) vorgesehen ist, auf dem der im abstandsgeregelten Fahrgeschwindigkeitsregler (ACC) hinterlegte Abstands-Sollwert anzeigbar ist, wobei eine Straßenfläche zum vorausfahrenden Fahrzeug (24) symbolisch durch zwei konvergierende Balken (25, 26) als Anzeige in einer Art Säulendiagramm (23), insbesondere mit farblich unterschiedlichen Abschnitten, darstellbar ist.

19. Bedienungseinrichtung nach Anspruch 18, **dadurch gekennzeichnet, dass** der Abstands-Sollwert in einem aufleuchtbaren Balkendiagramm (22) mit farblich unterschiedlichen Abschnitten anzeigbar ist.

20. Bedienungseinrichtung nach Anspruch 18 oder 19, **dadurch gekennzeichnet, dass** der eingestellte Abstands-Sollwert in dem aufleuchtbare Balkendiagramm (22) in Form einer symbolischen Kettendarstellung (32) zwischen zwei Kraftfahrzeugen und insbesondere zusätzlich durch ein aufleuchtbares Säulendiagramm (31) anzeigbar ist.

21. Bedienungseinrichtung nach einem der Ansprüche 11 bis 20, **dadurch gekennzeichnet, dass** im Display (21) eine Warnlampe (Ü/AH) vorgesehen ist, mit der die Aktivierung der Überhol- (Ü) oder Auffahrhilfe (AH) anzeigbar ist.

22. Bedienungseinrichtung nach einem der Ansprüche 1 bis 21, **dadurch gekennzeichnet, dass** eine erleuchtbare Fläche (33) und/oder ein aufleuchtbares Symbol (34) vorgesehen ist, mit dem die Aktivierung des Fahrgeschwindigkeitsreglers (FGR) anzeigbar ist.

## Claims

1. Device for operating a road-speed governor (FGR) and a distance-regulated road-speed governor (Adaptive Cruise Control, ACC) on board a motor vehicle with an operating lever (10) which is arranged on the steering column (11), can be brought into a SET+ position for increasing a set-point speed or into a SET-position for reducing said set-point speed and is provided with a button (12), whereby the road-speed governor (FGR) or the distance-regulated road-speed governor (ACC) can be activated or deactivated by actuation of said button (12) into a position WA or into a position AUS during the journey without the engine's being temporarily switched off, **characterised in that** a selector button (30, 40) is provided in the instrument panel and used for selecting a driving mode with the road-speed governor (FGR) or a driving mode with the distance-regulated road-speed governor (ACC) if the road-speed governor (FGR) and the distance-regulated road-speed governor (ACC) are deactivated, whereby it is possible to change the distance-related set-point value if the distance-regulated road-speed governor (ACC) is activated and that the road-speed governor (FGR) can be activated and deactivated by actuating the button (12) on the operating lever (10) provided that the driving mode with the road-speed governor is selected and that the distance-regulated road-speed governor (ACC) is activated and deactivated by actuating the button (12) on the operating lever (10) provided that the driving mode with the distance-regulated road-speed governor is selected.

2. Device for operating a road-speed governor (FGR) and a distance-regulated road-speed governor (ACC) on board a motor vehicle with an operating lever (10) which is arranged on the steering column (11), can be brought into a SET+ position for increasing a set-point speed or into a SET- position for reducing said set-point speed and is provided with a button (12), whereby the road-speed governor (FGR) or the distance-regulated road-speed governor (ACC) can be activated or deactivated by actuating said button (12) into a position WA or into a position AUS during the journey without the engine's being temporarily switched off, **characterised in that** a selector button (30) and a rotary switch (40) are provided in the instrument panel whereby the selector button (30) is used for selecting a driving mode with the road-speed governor (FGR) or a driving mode with the distance-regulated road-speed governor (ACC) if the road-speed governor (FGR) and the distance-regulated road-speed governor (ACC) are deactivated, whereby it is possible to change the distance-related set-point value with the aid of the rotary switch (40) and that the road-speed governor (FGR) can be activated and deactivated by actuating the button (12) on the operating lever provided that the driving mode with the road-speed governor is selected and that the distance-regulated road-speed governor (ACC) is activated and deactivated by actuating the button (12) on the operating lever (10) if the driving mode with the distance-regulated road-speed governor is selected.

3. Operating device according to the Claim 1 or 2, **characterised in that** after the engine had been switched off, a maximum selectable distance is automatically settable in the distance-regulated road-speed governor (ACC) and said distance-regulated road-speed governor (ACC) can be activated by switching the operating lever (10) to SET+ or SET-.

4. Operating device according to Claim 1 or 3, **characterised in that** the distance-related set-point value can be changed by actuating the selector button (30) designed as a rocker switch (30).

5. Operating device according to one of the Claims 1 to 4, **characterised in that** the operating lever (10) is designed so that the set-point speed can be changed gradually by briefly actuating said operating lever (10) and that the set-point speed can be changed continuously by keeping said operating lever (10) in an actuated position for a prolonged period.

6. Operating device according to one of the Claims 1 to 5, **characterised in that** if the road-speed governor (FGR) or the distance-regulated road-speed governor (ACC) has been deactivated during the journey without the engine having being temporarily switched off, the road-speed governor (FGR) or the distance-regulated road-speed governor (ACC) can each be activated by actuating the button (12) on the operating lever (10) and the last set set-point speed and the last set distance-related set-point value can be reset again.

7. Operating device according to one of the Claims 1 to 6, **characterised in that** an overtaking aid (Ü) for the activated distance-regulated road-speed governor (ACC) is provided, by means of which it is possible to override the distance-related set-point value by deactivating or setting to a minimum a distance regulator integrated into the distance-regulated road-speed governor (ACC).

8. Operating device according to Claim 7, **characterised in that** an overtaking-aid button (13) is provided in the operating lever (10), by means of which button (13) the overtaking aid (Ü) can be activated.

9. Operating device according to Claim 7 or 8, **characterised in that** the overtaking aid (Ü) can be automatically activated by actuating the direction-indicator lever.

10. Operating device according to Claim 9, **characterised in that** the overtaking aid (Ü) can be deactivated by actuating the button (12) on the operating lever (10) or by returning the direction-indicator lever to the neutral position.

11. Operating device according to one of the Claims 1 to 10, **characterised in that** a closing-up aid (AH) for the activated distance-regulated road-speed governor (ACC) is provided, by means of which it is possible to override the distance-related set-point value by deactivating or setting to a minimum a distance regulator integrated into the distance-regulated road-speed governor (ACC).

12. Operating device according to Claim 11, **characterised in that** the closing-up aid (AH) can be activated by actuating the accelerator pedal.

13. Operating device according to Claim 12, **characterised in that** the closing-up aid (AH) can be activated without a momentary engine setting being overridden by the distance-regulated road-speed governor (ACC) via the accelerator pedal.

14. Operating device according to Claim 11, **characterised in that** the closing-up aid (AH) can be activated by actuating the accelerator pedal and that the engine setting currently preset by the distance-regulated road-speed governor (ACC) can be overridden.

15. Operating device according to one of the Claims 11 to 14, **characterised in that** the closing-up aid (AH) remains active even after the foot has been taken off the accelerator pedal and a moderate deceleration of the vehicle can be initiated until the preset distance-related set-point value has been reached again.

16. Operating device according to one of the Claims 11 to 15, **characterised in that** if the overtaking aid (Ü) or the closing-up aid (AH) is activated and the distance to the vehicle ahead becomes dangerously short, an automatic forced deceleration can be initiated upon a command signal generated in the distance-regulated road-speed governor (ACC) and the overtaking aid (Ü) or the closing-up aid (AH) can be deactivated.

17. Operating device according to one of the Claims 11 to 16, **characterised in that** a distance measuring system with a distance sensor is provided and the overtaking aid (Ü) or the closing-up aid (AH) can be deactivated if a vehicle (B) recognised by the distance measuring system disappears from the assessment range of the distance sensor and/or another vehicle or no vehicle is recognised.

18. Operating device according to one of the Claims 1 to 17, **characterised in that** a display (21) is provided by means of which the distance-related set-point value stored in the distance-regulated road-speed governor (ACC) can be indicated, whereby a road surface to the vehicle ahead can be symbolically displayed by means of two converging bars (25, 26) in a kind of bar graph (23), particularly with sections of different colours.

19. Operating device according to Claim 18, **characterised in that** distance-related set-point value can be indicated in an illuminatable bar graph (22) with sections of different colours.

20. Operating device according to Claim 18 or 19, **characterised in that** the set distance-related set-point value can be displayed in the illuminatable bar graph (22) in the form of a symbolic chain presentation (32) between two motor vehicles and, in addition, particularly by means of an illuminatable bar graph (31).

21. Operating device according to one of the Claims 11 to 20, **characterised in that** a warning lamp (Ü/AH) is provided in the display (21), by means of which the activation of the overtaking aid (Ü) or the closing-up aid (AH) can be indicated.

22. Operating device according to one of the Claims 1 to 21, **characterised in that** a lightable area (33) and/or a lightable symbol (34) are/is provided by means of which the activation of the road-speed governor (FGR) can be indicated.

## Revendications

1. Dispositif de commande d'un régulateur de vitesse de croisière (FGR) ainsi que d'un régulateur de vitesse avec régulation de la distance (ACC) d'un véhicule à moteur, avec un commodo (10) disposé sur la colonne de direction (11), qui peut être actionné dans la position SET+ pour augmenter une valeur nominale ou dans la position SET- pour réduire une valeur nominale, et qui présente une touche (12) qui peut être activée ou désactivée, sans arrêter le moteur entre-temps, par son actionnement pendant la conduite dans une position WA (reprise) ou dans une position AUS (mise hors circuit) du régulateur de vitesse de croisière (FGR) ou du régulateur de vitesse avec régulation de la vitesse,
**caractérisé en ce que**
une touche de sélection (30, 40) est prévue sur le tableau de bord et permet, lorsque le régulateur de vitesse de croisière (FGR) et le régulateur de vitesse avec régulation de la distance (ACC) sont désactivés, de sélectionner un mode de conduite avec le régulateur de vitesse de croisière (FGR) ou un mode de conduite avec le régulateur de vitesse avec régulation de la distance (ACC), auquel cas, si le régulateur de vitesse avec régulation de la distance (ACC) est activé, il est possible de modifier la valeur nominale de la distance, et **en ce que** le régulateur de vitesse de croisière (FGR) est activé et désactivé par une pression sur la touche (12) du commodo (10) si le mode de conduite avec régulateur de vitesse de croisière est sélectionné, et **en ce que** le régulateur de vitesse avec régulation de la distance (ACC) peut être activé et désactivé par une pression sur la touche (12) du commodo (10) si le mode de conduite avec régulateur de vitesse avec régulation de la distance est sélectionné.

2. Dispositif de commande d'un régulateur de vitesse de croisière (FGR) ainsi que d'un régulateur de vitesse avec régulation de la distance (ACC) d'un véhicule à moteur, avec un commodo (10) disposé sur la colonne de direction (11), qui peut être actionné dans la position SET+ pour augmenter une valeur nominale ou dans la position SET- pour réduire une valeur nominale, et qui présente une touche (12) qui peut être activée ou désactivée, sans arrêter le moteur entre-temps, par son actionnement pendant la conduite dans une position WA (reprise) ou dans une position AUS (mise hors circuit) du régulateur de vitesse de croisière (FGR) ou du régulateur de vitesse avec régulation de la vitesse,
**caractérisé en ce que**
une touche de sélection (30) et un commutateur rotatif (40) sont prévus sur le tableau de bord, auquel cas la touche de sélection (30) permet, lorsque le régulateur de vitesse de croisière (FGR) et le régulateur de vitesse avec régulation de la distance (ACC) sont désactivés, de sélectionner un mode de conduite avec le régulateur de vitesse de croisière (FGR) ou un mode de conduite avec le régulateur de vitesse avec régulation de la distance (ACC) et auquel cas le commutateur rotatif (40) permet de modifier la valeur nominale de la distance de sécurité,
et **en ce que** le régulateur de vitesse de croisière (FGR) est activé et désactivé par une pression sur la touche (12) du commodo (10) si le mode de conduite avec régulateur de vitesse de croisière est sélectionné, et **en ce que** le régulateur de vitesse avec régulation de la distance (ACC) peut être activé et désactivé par une pression sur la touche (12) du commodo (10) si le mode de conduite avec régulateur de vitesse avec régulation de la distance est sélectionné.

3. Dispositif de commande selon la revendication 1 ou 2, **caractérisé en ce que**, une fois que le moteur a été arrêté, une distance plus importante peut être sélectionnée dans le régulateur de vitesse avec régulation de la distance (ACC) et **en ce que** le régulateur de vitesse avec régulation de la distance (ACC) peut être activé par actionnement du commodo (10) sur SET+ ou SET-.

4. Dispositif de commande selon la revendication 1 ou 3, **caractérisé en ce que** la valeur nominale de la distance de sécurité peut être modifiée en actionnant la touche de sélection (30) conçue comme touche à effleurement.

5. Dispositif de commande selon l'une quelconque des revendications 1 à 4, **caractérisé en ce que** le commodo (10) est conçu de telle manière que la vitesse nominale peut être modifiée par étape en actionnant le commodo (10) pendant un court instant et modifiée de manière continue en maintenant le commodo (10) plus longtemps.

6. Dispositif de commande selon l'une quelconque des revendications 1 à 5, **caractérisé en ce que**, si le régulateur de vitesse de croisière (FGR) ou le régulateur de vitesse avec régulation de la distance (ACC) a été désactivé pendant la conduite sans arrêter le moteur entre-temps, le régulateur de vitesse de croisière (FGR) ou le régulateur de vitesse avec régulation de la distance (ACC) peut être à chaque fois activé en actionnant la touche (12) prévu sur le commodo (10), et la vitesse nominale réglée en dernier et la valeur nominale de la distance de sécurité réglée en dernier peuvent de nouveau être appelées.

7. Dispositif de commande selon l'une quelconque des revendications 1 à 6, **caractérisé en ce qu'**une aide au dépassement (Ü) est prévue pour le régulateur de vitesse avec régulation de la distance (ACC) activé et permet de ne pas respecter la valeur nominale de distance de sécurité définie en désactivant la régulation de la distance intégrée dans le régulateur de vitesse avec régulation de la distance (ACC) ou en définissant la valeur sur une distance minimale.

8. Dispositif de commande selon la revendication 7, **caractérisé en ce qu'**un bouton d'aide au dépassement (13) est prévu sur le commodo (10) et permet d'activer l'aide au dépassement (Ü).

9. Dispositif de commande selon la revendication 7 ou 8, **caractérisé en ce que** l'aide au dépassement (Ü) est activée automatiquement lors de l'actionnement du commodo des clignotants.

10. Dispositif de commande selon la revendication 9, **caractérisé en ce que** l'aide au dépassement (Ü) peut être désactivée en actionnant la touche (12) sur le commodo ou en remettant le commodo des clignotants en position neutre.

11. Dispositif de commande selon l'une quelconque des revendications 1 à 10, **caractérisé en ce qu'**une aide au rapprochement (AH) est prévue pour le régulateur de vitesse avec régulation de la distance (ACC) activé et permet de ne pas respecter la valeur nominale de distance de sécurité définie en désactivant la régulation de la distance intégrée dans le régulateur de vitesse avec régulation de la distance (ACC) ou en définissant la valeur sur une distance minimale.

12. Dispositif de commande selon la revendication 11, **caractérisé en ce que** l'aide au rapprochement (AH) peut être activée en actionnant la pédale d'accélérateur.

13. Dispositif de commande selon la revendication 12, **caractérisé en ce que** l'aide au rapprochement (AH) peut être activée sans qu'une régulation momentanée du moteur spécifiée par le régulateur de vitesse avec régulation de la distance (ACC) soit surrégulée à l'aide de la pédale d'accélérateur.

14. Dispositif de commande selon la revendication 11, **caractérisé en ce que** l'aide au rapprochement (AH) peut être activée en actionnant la pédale d'accélérateur et la régulation momentanée du moteur spécifiée par le régulateur de vitesse avec régulation de la distance (ACC) peut être surrégulée.

15. Dispositif de commande selon l'une quelconque des revendications 11 à 14, **caractérisé en ce que** l'aide au rapprochement (AH) reste encore active après que le chauffeur a retiré le pied de la pédale d'accélérateur et une décélération modérée du véhicule peut être amorcée jusqu'à ce que la valeur nominale définie de la distance de sécurité soit de nouveau atteinte.

16. Dispositif de commande selon l'une quelconque des revendications 11 à 15, **caractérisé en ce que**, lorsque l'aide au dépassement (Ü) ou l'aide au rapprochement (AH) est activée, un freinage forcé automatique est amorcé suite à un signal de commande émis dans le régulateur de vitesse avec régulation de la distance (ACC) en cas de distance de sécurité trop réduite et dangereuse par rapport au véhicule qui précède et l'aide au dépassement (Ü) ou l'aide au rapprochement (AH) peut être désactivée.

17. Dispositif de commande selon l'une quelconque des revendications 11 à 16, **caractérisé en ce qu'**un système de mesure de la distance doté d'un capteur de distance est prévu et que l'aide au dépassement (Ü) ou l'aide au rapprochement (AH) peut être désactivée si un véhicule (B) détecté par le système de mesure de la distance disparaît de la zone de détection du capteur de distance et/ou si un autre véhicule ou aucun véhicule n'est plus détecté.

18. Dispositif de commande selon l'une quelconque des revendications 1 à 17, **caractérisé en ce qu'**est prévu un écran d'affichage sur lequel la valeur nominale de la distance de sécurité mémorisée dans le régulateur de vitesse avec régulation de la distance (ACC) peut être affichée, auquel cas une portion de route par rapport au véhicule qui précède (24) peut être représentée symboliquement par deux barres convergentes (25, 26) comme affichage sous forme de diagramme à bâtons (23), en particulier avec des sections de couleurs différentes.

19. Dispositif de commande selon la revendication 18, **caractérisé en ce que** la valeur nominale de la distance de sécurité peut être affichée dans un diagramme à bâtons (22) rétroéclairé avec des sections de couleurs différentes.

20. Dispositif de commande selon une des revendications 18 ou 19, **caractérisé en ce que** la valeur nominale définie de la distance de sécurité peut être affichée dans un diagramme à barres (22) rétroéclairé sous forme d'une représentation symbolique en chaîne (32) entre deux véhicules à moteur et en particulier, en plus, par un diagramme à bâtons (31).

21. Dispositif de commande selon l'une quelconque des revendications 11 à 20, **caractérisé en ce qu'**un voyant d'avertissement (Ü/AH) est prévu sur l'écran d'affichage pour indiquer que l'aide au dépassement (Ü) ou au rapprochement (AH) est activée.

22. Dispositif de commande selon l'une quelconque des revendications 1 à 21, **caractérisé en ce qu'**une surface (33) rétroéclairée et/ou un symbole (34) rétroéclairé est prévu pour indiquer que le régulateur de vitesse de croisière (FGR) est activé.
